# EUROPÄISCHE PATENTSCHRIFT

(11) **EP 1 694 426 B1**
(45) Veröffentlichungstag und Bekanntmachung des Hinweises auf die Patenterteilung: **28.08.2013**
(21) Anmeldenummer: 04786857.5
(22) Anmeldetag: 24.09.2004
(51) Int. Cl.: B01D 53/85

(54) **VORRICHTUNG ZUM REINIGEN VON ABGAS ODER ABLUFT**
DEVICE FOR PURIFYING EXHAUST GAS OR USED AIR
DISPOSITIF D'EPURATION DE GAZ D'ECHAPPEMENT OU D'AIR D'EVACUATION

(30) Priorität: 24.09.2003 DE 10344514
(43) Veröffentlichungstag der Anmeldung: 30.08.2006
(73) Patentinhaber: Söll GmbH, 95028 Hof (DE)
(72) Erfinder: PILZ, Harald, 09122 Chemnitz (DE)
(74) Vertreter: Isarpatent
(86) Internationale Anmeldenummer: PCT/DE2004/002141
(87) Internationale Veröffentlichungsnummer: WO 2005/030369

(56) Entgegenhaltungen:
- EP-A- 0 100 024
- CA-A1- 2 186 202
- US-A- 4 968 622
- US-B1- 6 524 843

## Beschreibung

Die vorliegende Erfindung betrifft eine Vorrichtung zum Reinigen gasförmiger Medien umfassend ein Behältnis mit mindestens einem darin angeordneten, mit Tropfkörpern gefüllten und befeuchteten Filterraum, der von dem zu reinigenden Medium durchströmt wird. Ebenfalls Gegenstand der Erfindung ist ein Verfahren zum Reinigen von Gas in einer solchen Vorrichtung.

Gasförmige Medien, wie Abluft und Abgase aus z. B. Anlagen der Entsorgungsbranche, Naßmüllvergährung, Recyclingbetrieben, landwirtschaftlichen Einrichtungen und Ställen, Biogasanlagen und anderen ablufterzeugenden Betrieben, sind häufig mit geruchsintensiven Stoffen wie Gasen und Partikeln beladen. Derartige Emissionen können zu einer Beeinträchtigung der näheren Umgebung und damit zur Stillegung der emittierenden Anlage oder des gesamten Betriebes führen.

Herkömmlicherweise werden solche Emissionen daher zur Abscheidung beispielsweise geruchsintensiver Stoffe mittels Biofiltern gereinigt. Bei solchen Biofiltern durchströmt das zu reinigende, schadstoffhaltige Gas den Filterraum, der üblicherweise mit organischem Material, wie z. B. Kompost, Torf, Baumrinde usw., gefüllt ist. Die geruchsintensiven Stoffe werden dort sorbiert und anschließend von den in dem biologisch aktiven Material enthaltenen Mikroorganismen in wässeriger Phase umgesetzt. Ein solcher Biofilter arbeitet weitgehend rückstandsfrei und führt zu unschädlichen Reaktionsprodukten wie CO₂ und H₂O sowie löslichen anorganischen Salzen, die dann der Umgebung zugeführt werden können.

Bei den Filtem aus dem Stand der Technik hat es sich als nachteilig erwiesen, dass die Einfahrzeit sehr lang ist. Die beispielsweise in dem Torf oder der Baumrinde enthaltenen Mikroorganismen bzw. deren Zusammensetzung muss sich zu Beginn des Prozesses an die zu reinigenden Schadstoffen anpassen, so dass die eigentliche Abbauleistung erst nach einiger Zeit optimiert ist. Ebenfalls ist es von Nachteil, dass derartige Biofilter aufgrund der auf das Volumen bezogenen vergleichsweise geringen aktiven Biomasse zum einen nur eine geringe Abbaurate aufweisen, zum anderen anfällig gegenüber Schwankungen der äußeren Bedingungen sind, wie z. B. der Temperatur und der Zusammensetzung der wässerigen Lösungen, mit denen die Trägerstoffe der biologisch aktiven Materialien befeuchtet werden. Die Druckschrift EP 01 100 024 A1 beschreibt ein Verfahren zur biologischen Reinigung von Abluft, bei dem die Abluft in einem Füllkörper enthaltenden Reaktionsturm mit einer zum biologischen Abbau der zu entfernenden Abluftinhaltsstoffe befähigen, auf den Füllkörper aufgewachsenen Mikroorganismuskultur in Kontakt gebracht wird, wobei der Füllkörper aus einer losen Schüttung von Trägerkörpern für die Mikroorganismen besteht, wobei die Trägerkörper bei einer Dichte von weniger als 0,5 g/cm³ aufweisen, die Schüttungen der Trägerkörper eine Raumerfüllung von weniger als 0,74 aufweist, Abluft und Wasser gleichzeitig von oben nach unten dem Füllkörper zugeführt werden, wobei das Wasser in einer solchen Menge zugeführt wird, die einerseits zur Feuchthaltung der Mikroorganismen ausreicht, und andererseits ohne Füllung der Zwischenräume der Trägerkörper im Reaktionsraum herabströmt.

Die Druckschrift CA 2 186 202 beschreibt ein Verfahren zu Impfen eines Biofilters zur Reinigung von Abluft mit Mikroorganismen. Bei dem Verfahren werden die ausgewählten Mikroorganismen zum Beimpfen des Biofilters immobilisiert durch ein Medium, welches mit der Viabilität der ausgewählten Mikroorganismen kompatibel ist.

Der Erfindung liegt die Aufgabe zugrunde, eine gemäß den eingangs angegebenen Merkmalen ausgebildete Vorrichtung und ein entsprechendes Verfahren bereitzustellen, deren Einfahrzeit gegenüber der der Anlagen aus dem Stand der Technik kurz ist. Eine weitere Aufgabe war es, die Abbaurate von derartigen Vorrichtungen zu verbessern.

Zur Lösung dieser Aufgabe wird erfindungsgemäß eine Vorrichtung gemäß Anspruch 5 bereitgestellt, die dadurch gekennzeichnet ist, dass die Tropfkörper mit in Abhängigkeit von den Verunreinigungen des Mediums ausgewählten Mikroorganismen beaufschlagt sind.

Durch Beaufschlagung bzw. Impfung der Tropfkörper mit Mikroorganismen, die in Abhängigkeit der Verunreinigungen des zu reinigenden Gases ausgewählt wurden, kann eine große Grundleistungsfähigkeit der Vorrichtung bereits bei bzw. kurz nach deren Inbetriebnahme erreicht werden, so dass die bei bekannten Vorrichtungen langen Einfahrzeiten deutlich reduziert werden können. Die zeitaufwendige Anpassung der Mikroorganismen auf die in dem zu reinigenden Gas enthaltenen Verunreinigungen, wie sie bei herkömmlichen Biofiltern erforderlich ist, entfällt. Aufgrund des großen Anteils der zum Abbau beitragenden Mikroorganismen, welcher bereits beim Impfen der Tropfkörper eingestellt werden kann, sowie deren gleichmäßiger Verteilung innerhalb des gesamten Filterraums können große Abbauraten erreicht werden.

Vorteilhaft sind die Mikroorganismen auf den Tropfkörpern immobilisiert, wodurch sie eine feste Position bezüglich des Tropfkörpers beibehalten. Aufgrund dieser Positionssicherung bleibt eine homogene Verteilung der auf den Tropfkörpern befindlichen Mikroorganismen innerhalb des Filterraumes auch über lange Zeiträume erhalten, so dass sich eine gleichbleibende Abbaurate einstellt.

In einer bevorzugten Ausführungsform sind die Tropfkörper inerte Aufwuchskörper aus Kunststoff, da sich Kunststoff als ein für die Bestückung mit Mikroorganismen besonders geeigneter Werkstoff erwiesen hat. In diesem Zusammenhang hat es sich ferner von Vorteil erwiesen, dass die Tropfkörper eine hohe Porösität aufweisen, die vorzugsweise 0,50 bis 0,99 beträgt. Damit wird eine spezifische Oberfläche im Bereich von 20 bis 2000 m²/m³ erreicht, wodurch sich die für das Aufbringen der Mikroorganismen nutzbare Fläche der Tropfkörper und somit auch die Abbaurate der Vorrichtung insgesamt vergrößert. Als besonders vorteilhaft hat sich eine Porösität der Tropfkörper im Bereich von 0,80 bis 0,98 bei einer spezifischen Oberfläche von 150 bis 500 m²/m³ erwiesen.

Besonders vorteilhaft ist ferner eine Ausgestaltung, bei welcher der Filterraum über in einem Kreislauf geführtes Wasser befeuchtet wird, das über an einem Flüssigkeitsverteiler angeordnete Düsen gleichmäßig eingedüst wird, wodurch zum einen die Austrocknung des Filterraums vermieden, zum andern die verfahrenstechnisch erforderliche Befeuchtung des Gases erfolgt. In diesem Zusammenhang hat sich als vorteilhaft erwiesen, wenn das in dem Kreislauf geführte Wasser einen pH-Wert zwischen 7 und 9 aufweist.

In vorteilhafter Ausgestaltung der Erfindung werden durch eine teilweise Ausschleusung von Kreislaufwasser sowie eine Frischwasserzufuhr, die kontinuierlich oder batchweise erfolgen kann, den Mikroorganismen neue Nährstoffe mit dem Frischwasser zugeführt. Durch die Ausschleusung von Kreislaufwasser werden in diesem befindliche Abbauprodukte, wie z.B. Sulfate, die eine Aufsalzung des Kreislaufwassers bewirken, über einen Abwasseraustritt teilweise aus der Vorrichtung entfernt.

Gemäß einer bevorzugten Ausgestaltung der Erfindung ist vorgesehen, daß die Strömung des zu reinigenden Gases innerhalb des Behältnisses im wesentlichen entgegen Strömungsrichtung des Kreislaufwassers verläuft. Diese Ausgestaltung hat den Vorteil, daß das gasförmige Medium und das Wasser über die gesamte Höhe des Behältnisses aneinander entlang gleiten, wodurch sich eine lange Kontaktstrecke ergibt.

Eine weitere vorteilhafte Ausgestaltung sieht vor, daß die Strömung des zu reinigenden Gases innerhalb des Behältnisses im wesentlichen gleich der Strömungsrichtung des Kreislaufwassers ist. Diese Ausgestaltung hat sich vor allem für Vorrichtungen, deren Filterraum eine vergleichsweise große Höhe aufweist, als vorteilhaft erwiesen, da bereits eine Durchmischung des gasförmigen Mediums und des Wassers vor Eintritt in den Filterraum hohen erfolgt.

Die erfindungsgemäße Vorrichtung hat ferner den Vorteil, daß die Tropfkörper in Abhängigkeit einer aus den Drücken vor und hinter dem Filterraum resultierenden Druckdifferenz durch eine Wasser-, Luft- oder kombinierte Wasser-Luft-Spülung gereinigt werden können. Durch diese Reinigung werden die während des Betriebs der Vorrichtung aufwachsenden Mikroorganismen zumindest teilweise von den Tropfkörpern entfernt. Dadurch kann der Gasdurchsatz aufrecht erhalten werden. Eine solche Reinigung ist bei herkömmlichen, z. B. mit Torf oder Baumrinde versehenen Biofiltern nicht möglich. Vielmehr muss das gesamte bioaktive Material nach einer gewissen Zeit ausgetauscht werden mit der Folge, dass die Vorrichtung erneut eingefahren und das ausgetauschte Material entsorgt werden muss.

Zur Lösung der erfindungsgemäßen Aufgabe wird ferner ein Verfahren zum Reinigen von Gas innerhalb einer Vorrichtung mit den eingangs angegebenen Merkmalen gemäß Anspruch 1 bereitgestellt, das dadurch gekennzeichnet ist, dass das gasförmige Medium mit Wasser und Mikroorganismen, welche in Abhängigkeit der Verunreinigungen des Mediums gewählt und auf die Tropfkörper aufgebracht sind, in Kontakt gebracht wird.

Vorteilhaft erfolgt die Beaufschlagung der Tropfkörper außerhalb des Behältnisses, wodurch eine homogene Beaufschlagung einer großen Anzahl Tropfkörper erfolgt, wie sie innerhalb des Behältnisses nicht zu erreichen wäre, da die einzelnen Tropfkörper dort nach Art einer Schüttung in dem Filterraum liegen.

Von besonderem Vorteil hat sich eine Ausführung des erfindungsgemäßen Verfahrens erwiesen, bei welcher die Mikroorganismen in einem Gel gelöst auf die Tropfkörper aufgebracht werden, da hierdurch ein gleichmäßiger und zugleich gut aushärtbarer und somit immobilisierbarer Auftrag der Mikroorganismen ermöglicht wird. In diesen Zusammenhang hat es sich ferner als vorteilhaft erwiesen, dass die Aushärtung des Gels durch Trocknen erfolgt, wobei eine weitere Ausgestaltung vorsieht, dass die Austrocknung durch einen Härter bzw. eine Härterlösung beschleunigt wird.

Weitere Einzelheiten und Vorteile der Erfindung werden nachfolgend anhand zweier auf den Zeichnungen dargestellter, lediglich beispielhafter Ausführungsbeispiele beschrieben. In den Zeichnungen zeigen:
- Fig. 1: eine nach dem Gegenstromprinzip arbeitende Vorrichtung in einer vereinfachten, schematischen Seitenansicht und
- Fig. 2: eine nach dem Gleichstromprinzip arbeitende Vorrichtung ebenfalls in einer vereinfachten, schematischen Seitenansicht.

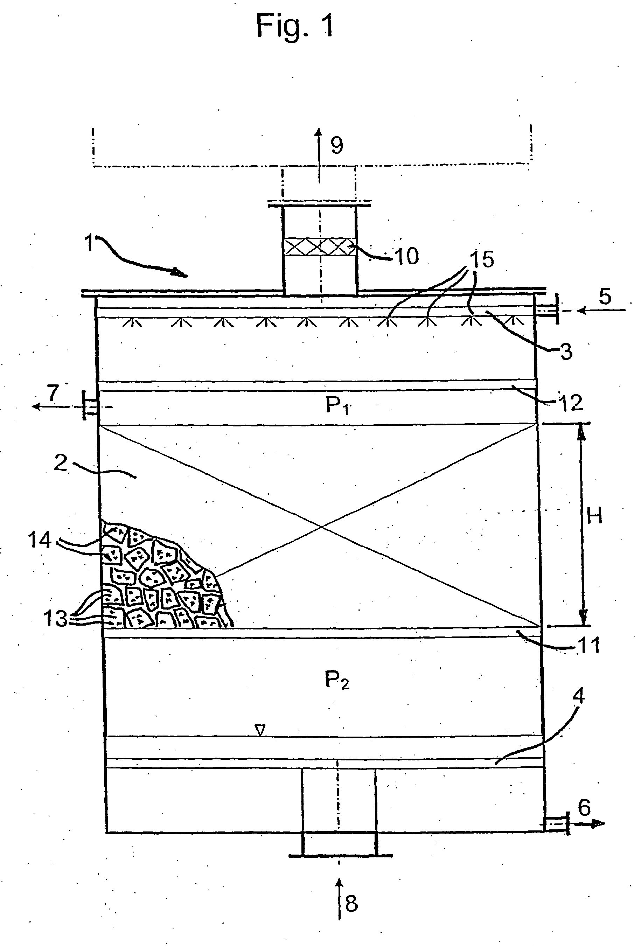

In Fig. 1 ist eine nach dem Gegenstromprinzip arbeitende Vorrichtung in einer schematischen Seitenansicht dargestellt. Das zu reinigende Gas tritt im unteren Bereich, d. h. im Sumpfbereich der Vorrichtung am Gaseintritt 8 in das Behältnis 1 ein, durchströmt den

Filterraum 2 und tritt an dem gegenüber liegenden, oberen Ende über den Gasaustritt 9 gereinigt aus. Die Strömungsrichtung des Kreislaufwassers, welches am Wassereintritt 5 über einen Flüssigkeitsverteiler 3 sowie die an diesem angeordneten Düsen 15 in das Behältnis 1 eintritt und an dessen unterem Ende über den Wasseraustritt 6 wieder austritt, verläuft entgegen der Strömungsrichtung des zu reinigenden Gases.

Die Strömungsgeschwindigkeiten des zu reinigenden Gases und des Kreislaufwassers sind innerhalb des Behältnisses 1 vorzugsweise derart aufeinander abgestimmt, daß in dem Gas befindliche, wasserlösliche, organische oder anorganische Substanzen von dem Wasser gelöst werden. Diese herausgelösten Substanzen treten dann mit den in dem Filterraum 2 aufgeschütteten Tropfkörpern 14 in Kontakt, wo sie von den dort aufgebrachten Mikroorganismen 13 zu unschädlichen bzw. geruchsneutralen Substanzen abgebaut werden. In dem Wasser befindliche Abbauprodukte, wie z.B. Sulfate oder Nitrate, die mit der Zeit eine Aufsalzung des Kreislaufwassers bewirken, werden durch teilweises Ausschleusen mit Kreislaufwasser über den Abwasseraustritt 7 abgeführt. Die abgeführte Menge Wasser wird durch die gleiche Menge Frischwasser, die über einen zwischen dem Wasseraustritt und dem Wassereintritt angeordneten Bypass zugeführt wird, ausgeglichen, so daß sich stets eine in etwa gleichbleibende Menge Wasser in dem Kreislauf befindet. Mit dem Frischwasser werden gleichzeitig Nährstoffe für die Mikroorganismen zugeführt.

Nach dem Durchtritt durch den Filterraum 2 verläßt der gereinigte Gasstrom entgegen dem von oben herab regnenden Wasserstrom das Behältnis 1 am Gasaustritt 9. Das gereinigte Gas wird dann zur Trocknung durch einen Tropfenabscheider 10 geführt, bevor es an die Umgebung entlassen wird.

Der in etwa mittig in dem Behältnis 1 angeordnete Filterraum 2 umfaßt, wie im unteren linken Bereich des Filterraums 2 angedeutet, eine Vielzahl Tropfkörper 14. Der gesamte Filterraum 2 nach unten durch ein Tragrost 11 begrenzt und mit einer Schüttung von Tropfkörpern 14 ausgefüllt, die den eigentlichen Filter bilden. Ein Niederhalterost 12 bildet eine Sicherung der Tropfkörper 14 gegen Ausblasen. Die auf die Tropfkörper 14 aufgebrachten und mit 13 bezeichneten Mikroorganismen sind auf dem Tropfkörper 14 immobilisiert und in Abhängigkeit von den Verunreinigungen des zu reinigenden, gasförmigen Mediums ausgewählt. Auch ist die Konzentration ggf. verschiedener Mikroorganismen 13 im Falle einer dem Abbauprozeß zugrunde liegenden Abbaukette, bei der verschiedene Zwischenprodukte von entsprechenden Mikroorganismen abgebaut werden, einstellbar.

Als Mikroorganismen kommen alle üblichen Reinkulturen oder Mischkulturen von Bakterien, Pilzen oder Hefen in Betracht, es werden aber vor allem der Sicherheitsklasse 1 angehörige eingesetzt, die keinerlei Gefährdung für Mensch, Tier und Umwelt darstellen. Besonders vorteilhaft hat sich die Verwendung von Bakterienkulturen folgender Arten erwiesen:
*Bacillus subtilis, Bacillus licheniformis, Bacillus pasteurii, Arthrobacter citreus, Arthrobacter globiformis, Pseudomonas stutzeri, Pseudomonas fluorescens, Cellulomonas flavigena, Thiothrix nivea, Thiobacillus thioparus, Nitrosomonas* Species (z. B. *N. europaea)* und *Nitrobacter* Species (z.B. *N. winogradskyi).*

Die Beaufschlagung der Tropfkörper 14 mit diesen Mikroorganismen 13 erfolgt in Abhängigkeit von den Verunreinigungen des zu reinigenden Gases, wodurch sich die langen Einfahrzeiten, die bei herkömmlichen Biofiltern bis zu drei Monate betragen, auf demgegenüber deutlich reduzierte Einfahrzeiten von in etwa 2 Wochen verringern lassen.

Sollen beispielsweise stickstoffhaltige Verbindungen aus dem Gas entfernt werden, werden Mikroorganismen bzw. chemolithoautotrophe Nitrifikanten ausgewählt, beispielsweise aus den Ammoniakoxidanten und den Nitritoxidanten, zu den nitrifizierende Mikroorganismen, insbesondere Bakterien der Gattungen Nitrosococcus, *Nitrosospira, Nitrosovibrio und Nitrosospira,* insbesondere die Arten Nitrosomonas halophila, *Nitrosomonas eutropha* und *Nitrosomonas europaea,* Nitrosomonas oligotropha, Nitrosomonas ureae, Nitrosomonas aestuarii, Nitrosomonas marina, Nitrosomonas sp. 3 Nm 51, Nitrosomonas communis, Nitrosomonas nitrosa, Nitrosomonas sp. 1 Nm 33, Nitrosomonas sp. 2 Nm 41, Nitrosomonas cryotolerans, sowie die nitritoxidierenden Bakterien der Gattungen *Nitrobacter* und *Nitrospira,* insbesondere *Nitrobacter winogradskyi,* zählen.

Mit der erfindungsgemäßen Vorrichtung ist es unter anderem möglich, chemische Komponenten wie NH₃, NOₓ, H₂S, R-SH, sowie die meisten wasserlöslichen organischen Inhaltsstoffe zu entfernen, wobei über die oben genannten Mikroorganismen die Abbauleistung bzw. Abbaurate eingestellt werden kann. So können Raumabbauleistungen der wasserlöslichen, organischen Inhaltsstoffe im Bereich von 20 bis 400 mg pro m³ Biofiltermedium bzw. Filterraum und Stunde Verweilzeit, und in besonders günstigen Bereichen bei 50 bis 200 mg/m³h erreicht werden. Für Schwefelwasserstoffverbindungen liegt die Abbaurate vorzugsweise in Bereich von 5 bis 200 mg/m³h, insbesondere im besonders günstigen Bereich bei 10 bis 100 mg/m³h.

Je nach Verschmutzungsgrad des zu reinigenden Mediums können auch mehrere Vorrichtungen modular in Reihe oder parallel geschaltet werden.

Die Mikroorganismen 13 sind beim Ausführungsbeispiel gemeinsam mit einem Gel auf die Tropfkörper 14 aufgebracht. Dazu werden die Tropfkörper 14 außerhalb des Behältnisses 1 zunächst mit einer Gellösung vermischt, bevor das so gewonnene Gemisch auf die Tropfkörper 14 aufgebracht und dort immobilisiert wird. Das Aufbringen der Gellösung auf die Tropfkörper 14 kann zum Beispiel durch Eintauchen erfolgen. Ggf. kann überschüssiges Gel auch mechanisch, z.B. durch Abtropfen entfernt werden. Anschließend härtet das Gel eine Zeit lang auf den Tropfkörpern 14 aus, wobei das Aushärten z.B. durch Trocknen oder in Kontakt bringen der Gellösung mit einem geeigneten Härter bzw. einer Härterlösung beschleunigt werden kann. Die Schichtdicke des Gels auf den Tropfkörpern 14 ist vergleichsweise dünn und sollte nur zu einer geringen Verringerung der Oberfläche des porösen Tropfkörpers führen. Vorzugsweise beträgt die Dicke der Gelschicht zwischen 1 und 500 µm, wobei sich Schichtdicken im Bereich von 10 bis 100 µm als besonders vorteilhaft erwiesen haben.

Als Gele kommen insbesondere gelbildende Polymere in Betracht, die keinen nachteiligen Eihfluß auf die Aktivität der Mikroorganismen haben Beispiele für geeignete Polymere sind polymere Polysaccharide, wie Agarose, Alginat oder Cellulose, Proteine, wie Gelatine, Gummi arabicum, Albumin oder Fibrinogen, Ethylcellulose, Methylcellulose, Carboxymethylethylcellulose, Celluloseacetate, Alkali-Cellulosesulfat Polyanillin, Polypyrrol, Polyvinylpyrolidon, Polystyrol, Polyvinylchlorid, Polyvinylalkohol, Polyethylen, Polypropylen, Copolymere aus Polystyrol und Maleinsäureanhydrid, Epoxidharze, Polyethylenimine, Copolymere aus Styrol und Methylmethacrylat, Polystyrolsulfonat, Polyacrylate und Polymethacrylate, Polycarbonate, Polyester, Silikone, Methylcellulose, Gemische aus Gelatine und Wasserglas, Gelatine und Polyphosphat, Celluloseacetat und Phthalat, Gelatine und Copolymeren aus Maleinsäureanhydrid und Methylvinylether, Celluloseacetatbutyrat, Chitosan, Polydialkyldimethylammoniumchlorid, Mischungen aus Polyacrylsäuren und Polydiallyldimethylammoniumchlorid sowie beliebige Gemische der voranstehenden. Als besonders geeignet haben sich Polyvinylalkohole oder Polysaccharide, wie Alginat, erwiesen.

Weiterhin bevorzugt sind Polymere, die gegebenenfalls auch als Kohlenstoffquelle für die verwendeten Mikroorganismen dienen können. In dieser Ausführungsform wird die Matrix durch die Mikroorganismen abgebaut und zersetzt. Sobald die Struktur ausreichend große Poren aufweist, erfolgt eine Freisetzung der Mikroorganismen.

Das Polymermaterial kann gegebenenfalls vernetzt sein. Übliche Vernetzer sind Glutaraldehyd, Harnstoff/Formaldehydharze, Taninverbindungen, wie Taninsäure, Erdalkaliionen, wie Ca²⁺-Ionen, die z. B. als Chloride zugesetzt werden können, und deren Gemische.

Als Gelkonzentrationen sind 0,1 bis 4,0 % Gel in Lösung günstig, für die Immobilisierung der Mikroorganismen sind Gelkonzentrationen zwischen 0,5 bis 2,0 % besonders vorteilhaft. Die bei der Immobilisierung verwendete Temperatur kann sich auf die Schichtdicke der produzierten Gele in reziprok proportionaler Weise auswirken. Bei der Verwendung von mesophilen aeroben Bakterienarten sollte eine Temperatur von 38° bis 40°C nicht überschritten werden. Um eine Verklumpung der gelierten Filtermedien zu vermeiden sollte die Immobilisationstemperatur 20°C nicht unterschreiten werden. Die Immobilisationstemperatur sollte am günstigsten im Bereich zwischen 25 und 30°C liegen. Vor allem bei der Immobilisation von Ammonium- und Nitrit-abbauenden Bakterien (Nitrifikanten) sollte eine Temperatur 30°C nicht überschritten werden. Bei der Immobilisation von thermophilen Organismen können höhere Temperaturen und daraus resultierende dünnere Schichtdicken realisiert werden.

Wie Fig. 1 weiter zu entnehmen ist, werden die Tropfkörper 14 bzw. der gesamte Filterraum 2 mit Hilfe der oberhalb des Filterraums 2 angeordneten Düsen 3 über dem gesamten Querschnitt des Behältnisses 1 gleichmäßig mit Kreislaufwasser befeuchtet. Die gleichmäßige Wasserverteilung kann durch ein Verteilerrohrregister mit über die Rohrlängsachse verteilten Sprühdüsen erfolgen, die die Oberfläche des Wassers vergrößern. Der pH-Wert des Kreislaufwassers beträgt zwischen 7,und 9 und ist über ein in Fig. 1 nicht dargestelltes Puffersystem, in welchem beispielsweise eine Zugabe von carbonat- oder kalziumhaltigen Substanzen in unterschiedlichen Salzen erfolgt, eingestellt.

Auch die Zuführung des zu reinigenden Gases ist über einen Gasverteiler 4 im Sumpfbereich des Behältnisses 4, in welchem sich ein Teil des Kreislaufwassers zu einer hydrostätischen Wassersäule aufstaut, an den Querschnitt des Behältnisses 1 angepaßt, wobei der Gasverteiler 4 unterhalb der Wasserfläche angeordnet ist. Da der Gasaustritt unterhalb der Oberfläche der Wassersäule liegt, wird das Gas bereits im Sumpfbereich mit Wasser befeuchtet.

Mit zunehmender Betriebsdauer der erfindungsgemäßen Vorrichtung wachsen die Mikroorganismen auf den Tropfkörpern 14 auf, wodurch sich die für den Durchtritt sowie die Reinigung des zu reinigenden Gases zur Verfügung stehende Fläche verringert und so ein zunehmendes Druckgefälle ΔP in Strömungsrichtung entsteht. Mit zunehmendem Aufwachsen der Mikroorganismen 13 steigt der Druck P₂ unterhalb bzw. in Strömungsrichtung des zu reinigenden Gases vor dem Filterraum 2 an, da sich der Gasdurchsatz des Filterraumes 2 bei gleichbleibender Gaszuführung über den Gaseintritt 8 reduziert.

Daher ist es in Abhängigkeit der Druckdifferenz vor und hinter dem Filterraum 2 bzw. nach einer gewissen Betriebsdauer erforderlich, den Tropfkörper 14 zu reinigen und so den Gasdurchsatz wieder zu steigern. Hierzu wird der Filterraum 2 bzw. die Tropfkörper 14 von oben her überflutet und zusätzlich über den Gaseinlaß 8 durch eine Wasser-, Luft- oder kombinierte Wasser-Luft-Spülung gereinigt. Durch diese kombinierte Wasser-Luft-Spülung werden die Tropfkörper 14 angehoben und es entstehen innerhalb der gesamten Schüttung, d.h. vor allem auch zwischen den einzelnen Tropfkörpern 14 Turbulenzen, die zur Abreinigung der aufgewachsenen Mikroorganismen 13 führen. Ein Austrag der Tropfkörper 14 wird dabei durch das oberhalb des Filterraums 2 angeordnete Niederhalterost 12 verhindert.

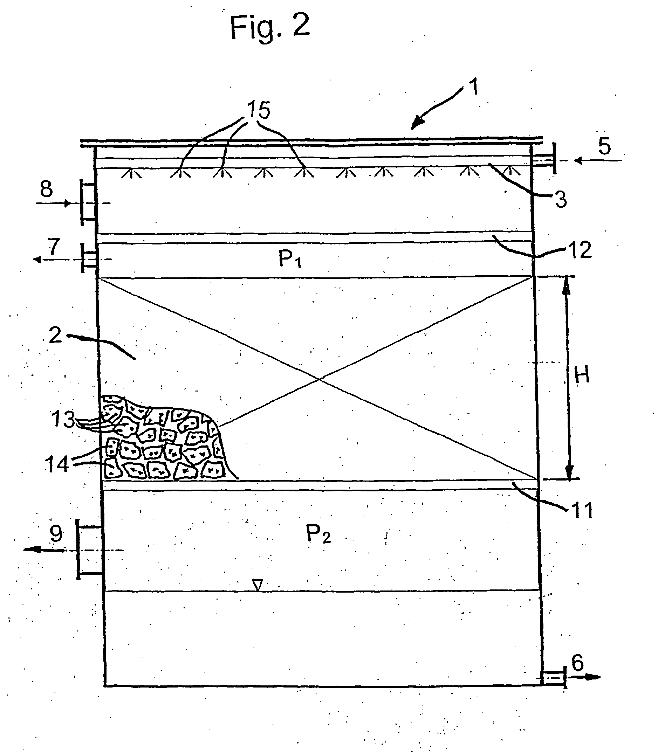

In Fig. 2 ist eine nach dem Gleichstromprinzip arbeitende Vorrichtung in einer schematischen Seitenansicht dargestellt. Anders als bei dem anhand von Fig. 1 beschriebenen Ausführungsbeispiel tritt das zu reinigende Gas hier über den Gaseinlaß 8 am oberen Ende des Behältnisses 1 in die Vorrichtung ein, wo bereits eine erste Durchmischung von Gas und Wasser erfolgt. Gas und Wasser durchströmen dann von oben nach unten gemeinsam den Filterraum 2. Anschließend verläßt das gereinigte Gas über den Gasaustritt 9 das Behältnis 1, das Wasser wird hingegen über den Wasseraustritt 6 in den Kreislauf zurückgeführt und über den Wassereintritt 5 bzw. die Düsen 15 erneut eingedüst.

Diese nach dem Gleichstromprinzip arbeitende Vorrichtung hat sich vor allem bei Vorrichtungen, deren Filterraum 2 eine große Höhe H aufweist ausgezeichnet. In nach dem Gegenstromprinzip arbeitenden Vorrichtungen ist hingegen bei großen Höhen H, z.B. im Bereich von 1,5 m, die gegenseitige Abstimmung von Wasser- und Gasströmung zur Bildung eines Gemisches problematisch, da die als Schüttung in dem Filterraum 2 befindlichen Tropfkörper 14 mit zunehmende Höhe H im Laufe der Zeit zu einer Kanalbildung neigen, d.h. es bilden sich einerseits Kanäle für das von oben nach unten strömende Wasser und davon verschiedene Kanäle für das von unten nach oben strömende Gas, weshalb diese nicht bzw. nur unzureichend miteinander in Kontakt treten und die verfahrenstechnisch erforderliche Befeuchtung des Gases nicht bzw. nicht vor Eintritt in das Filterbett erfolgt. Diesem Problem begegnen nach dem Gleichstromprinzip arbeitende Anlagen dadurch, daß die Durchmischung von Wasser und Luft schon vor Eintritt in den Filterraum erfolgt, weshalb Kanalbildungen innerhalb des Filterbetts weitgehend unkritisch sind.

### Bezugszeichenliste:

- 1: Behältnis
- 2: Filterraum
- 3: Flüssigkeitsverteiler
- 4: Gasverteiler
- 5: Wassereintritt
- 6: Wasseraustritt
- 7: Abwasseraustritt
- 8: Gaseintritt
- 9: Gasaustritt
- 10: Tropfenabscheider
- 11: Tragrost
- 12: Niederhalterost
- 13: Mikroorganismen
- 14: Tropfkörper
- 15: Düse

- P₁: Druck
- P₂: Druck
- ΔP: Druckdifferenz
- H: Höhe des Filterraums

## Patentansprüche

1. Verfahren zum Reinigen gasförmiger Medien mit einer ein Behältnis (1) mit mindestens einem darin angeordneten, mit Tropfkörpern (14) gefüllten und befeuchteten Filterraum (2), der von dem zu reinigenden Medium durchströmt wird, umfassenden Vorrichtung,
**dadurch gekennzeichnet, dass**
das gasförmige Medium mit Wasser und Mikroorganismen (13), welche in Abhängigkeit der Verunreinigungen des Mediums gewählt und auf die Tropfkörper (14) aufgebracht sind, in Kontakt gebracht wird, wobei die Mikroorganismen (13) in einem Gel gelöst auf die Tropfkörper aufgebracht werden und die Aushärtung des Gels durch Trocknen erfolgt.

2. Verfahren nach Anspruch 1,
**dadurch gekennzeichnet, dass** die Beaufschlagung der Tropfkörper (14) außerhalb des Behältnisses (1) erfolgt.

3. Verfahren nach Anspruch 1 oder 2,
**dadurch gekennzeichnet, dass** das Aushärten des Gels mittels eines Härters oder einer Härtelösung beschleunigt wird.

4. Verfahren nach einem der vorhergehenden Ansprüche,
**dadurch gekennzeichnet, dass** die Tropfkörper in Abhängigkeit der Druckdifferenz durch eine Wasser-, Luft- oder kombinierte Wasser-Luft-Spülung gereinigt werden.

5. Vorrichtung zur Durchführung des Verfahrens nach einem oder mehreren der Ansprüche 1-4, umfassend ein Behältnis (1) mit mindestens einem darin angeordneten, mit Tropfkörpern (14) gefüllten und befeuchteten Filterraum (2), **dadurch gekennzeichnet, dass** die Tropfkörper (14) mit in Abhängigkeit von den Verunreinigungen des Mediums ausgewählten Mikroorganismen (13) beaufschlagt sind, wobei die Mikroorganismen (13) in Form eines getrockneten Gels auf den Tropfkörpern (14) immobilisiert sind.

6. Vorrichtung nach Anspruch 5, **dadurch gekennzeichnet, dass** die Tropfkörper (14) inerte Aufwuchskörper aus Kunststoff sind.

7. Vorrichtung nach Anspruch 5 und/oder Anspruch 6, **dadurch gekennzeichnet, dass** die Tropfkörper eine hohe Porösität aufweisen.

8. Vorrichtung nach Anspruch 5, **dadurch gekennzeichnet, dass** der Filterraum (2) an einem Flüssigkeitsverteiler (3) angeordnete Düsen (15) aufweist.

## Claims

1. Method for purifying gaseous media with a device comprising a container (1) that is provided with at least one filtering chamber (2) which is disposed therein and is filled with and humidified by means of trickling filters (14), and which is penetrated by the medium that is to be purified,
**characterized in that** the gaseous medium is brought in contact with water and microorganisms (13), which are selected in accordance with the impurities of the medium and are applied to the trickling filters (14), wherein the microorganisms (13) are dissolved in a gel and are applied to the trickling filters (14) and the hardening of the gel is carried out by drying.

2. Method according to claim 1, **characterized in that** the appliance of the trickling filters (14) is executed external the container (1).

3. Method according to claim 1 or 2, characterized that the hardening of the gel is accelerated by means of a hardener or a hardening-solution.

4. Method according to one of the preceding claims, **characterized in that** the trickling filters (14) are cleaned in dependence of a difference in pressure by means of a water-rinsing, air-rinsing or a combined water-air-rinsing.

5. Device for carrying out the method according to one or more of claims 1 to 4, comprising a container (1) that is provided with at least one filtering chamber (2) which is disposed therein and is filled with and humidified by means of trickling filters (14), **characterized in that** the trickling filters (14) are impinged by microorganisms (13) which are selected in accordance with the impurities of the medium, wherein the microorganisms (13) are immobilized on the trickling filters (14) by means of dried gel.

6. Device according to claim 5, **characterized in that** the trickling filters (14) are inert growth bodies made of plastic.

7. Device according to claim 5 and/or claim 6, **characterized in that** the trickling filters have a high porosity.

8. Device according to claim 5, **characterized in that** the filtering chamber (2) comprising nozzles (15) which are disposed on a liquid distributor (3).

## Revendications

1. Procédé d'épuration de milieux gazeux avec un dispositif comprenant un récipient (1) qui comporte au moins une chambre de filtration (2) placée dans le récipient, remplie et mouillée avec des lits bactériens (14) et traversée par le milieu à épurer,
**caractérisé par le fait que** le milieu gazeux est mis en contact avec de l'eau et avec des micro-organismes (13) qui sont sélectionnés en fonction des impuretés du milieu et sont appliqués sur les lits bactériens (14), les micro-organismes (13), dissous dans un gel, étant appliqués sur les lits bactériens et le durcissement du gel étant effectué par séchage.

2. Procédé selon la revendication 1, **caractérisé par le fait que** l'alimentation des lits bactériens (14) s'effectue en dehors du récipient (1).

3. Procédé selon la revendication 1 ou 2, **caractérisé par le fait que** le durcissement du gel est accéléré au moyen d'un durcisseur ou d'une solution de durcissement.

4. Procédé selon l'une des revendications précédentes, **caractérisé par le fait que** les lits bactériens sont épurés, en fonction de la différence de pression, par un rinçage à l'eau, à l'air ou un rinçage combiné à l'eau et à l'air.

5. Dispositif de réalisation du procédé selon l'une ou
plusieurs des revendications 1 à 4, comprenant un récipient (1) qui comporte au moins une chambre de filtration (2) placée dans le récipient, remplie et mouillée avec des lits bactériens (14), **caractérisé par le fait que** les lits bactériens (14) sont alimentés en micro-organismes (13) sélectionnés en fonction des impuretés du milieu, les micro-organismes (13) étant immobilisés sur les lits bactériens (14) sous la forme d'un gel séché.

6. Dispositif selon la revendication 5, **caractérisé par le fait que** les lits bactériens (14) sont des corps de culture inertes en matière synthétique.

7. Dispositif selon la revendication 5 et/ou 6, **caractérisé par le fait que** les lits bactériens présentent une porosité élevée.

8. Dispositif selon la revendication 5, **caractérisé par le fait que** la chambre de filtration (2) présente des buses (15) disposées sur un distributeur de liquide (3).
